# EUROPEAN PATENT APPLICATION

(11) **EP 2 051 060 A2**
(43) Date of publication of application: **22.04.2009**
(21) Application number: 08018160.5
(22) Date of filing: 16.10.2008
(51) Int. Cl.: G01N 13/14, G12B 21/06

(54) **Cantilever for near field optical microscopes, plasmon enhanced fluorescence microscope employing the cantilever, and fluorescence detecting method**

(30) Priority: 17.10.2007 JP 2007270284
(71) Applicant: FUJIFILM Corporation, Minato-ku Tokyo (JP)
(72) Inventor: Ohtsuka, Hisashi, Ashigarakami-gun Kanagawa-ken (JP)
(74) Representative: Höhfeld, Jochen

(57) **Abstract**

Quantitative properties of fluorescent signals are secured, by suppressing fluorescence light loss during fluorescence detection using a cantilever for near field optical microscopes having a metal probe.
A cantilever (21) for near field optical microscopes is equipped with a conical probe (24) in the vicinity of a free end thereof. The probe (24) includes a thin film portion (27) constituted by at least one layer of thin film that serves as the surface of the probe, and an inner bulk portion (28) which is covered by the thin film portion. The outermost layer of the thin film portion (27) is a thin dielectric film (25), and a metal portion (29) is provided toward the interior of the probe (24) from the thin dielectric film (25).

## Description

### BACKGROUND OF THE INVENTION

### Field of the Invention

The present invention is related to a cantilever for near field optical microscopes. The present invention is also related to a fluorescence microscope and a fluorescence detecting method that employ the cantilever. More specifically, the present invention is related to a plasmon enhanced fluorescence microscope and a plasmon enhanced fluorescence detecting method that utilize plasmon enhancement.

### Description of the Related Art

Near field optical microscopes are optical microscopes that observe, analyze, and process samples with probes in which photons are sealed within regions less than or equal to diffraction limits. Illuminated light is focused into a region of less than or equal to several tens of nanometers by near field probes, and light which is scattered by and which is transmitted through substances present within the region or fluorescence emitted by the substances are detected through a spectroscope. Thereby, the spectral properties of the substances can be measured on a nano scale. Near field optical microscopes may be positioned as evaluating apparatuses which are scanning probe microscopes, such as scanning tunnel microscopes and atomic force microscopes, having spectroscopic analyzing functions. There are expectations that near field optical microscopes will function as evaluation/analyzing apparatuses for new materials and nanodevices created by nanotechnology.

Raman spectroscopy using a metal probe which is capable of detecting a substance at a molecular level, as described in Y. Inouye and S. Kawata, "Near field Raman spectroscopy and imaging using a tip enhanced field", Spectral Researches, Vol. 51, No. 6, pp. 276-285, 2002, and Y. Inouye et al., "Tip-enhanced Near-field Raman Spectroscopy for Nano-imaging", Surface Science, Vol. 26, No. 11, pp. 667-674, 2005. In this Raman spectroscopy method, light is caused to enter the leading end of a metal probe, to cause local plasmon to be generated. A localized strong electric field which is generated by the local plasmon between the probe and a substrate is utilized. Thereby, the scattering cross sectional area during the Raman process by molecules directly beneath the probe is effectively increased. Theoretically, it is considered that an increased intensity from ten times to 10⁶ times the intensity of incident light can be obtained (refer to section 2.2.1 at page 277 of Y. Inouye and S. Kawata, "Near field Raman spectroscopy and imaging using a tip enhanced field", Spectral Researches, Vol. 51, No. 6, pp. 276-285, 2002). However, Raman signals are greatly influenced by the environment and conditions in which detection target substances are placed, such as solvents. In addition, vibrations of foreign substances are also reflected in spectra. Therefore, although Raman spectroscopy is effective for qualitative analysis, expectations cannot be held regarding the quantitative properties thereof. Further, Raman spectroscopy apparatuses are generally large, expensive, and have poor operability.

Meanwhile, fluorescence microscopes that employ fluorometry are apparatuses which have realized detection of detection target substances at the molecular level using metal probes. In fluorometry, a sample, which is considered to contain a detection target substance that emits fluorescence when excited by light having a specific wavelength, is irradiated with an excitation light beam of the aforementioned specific wavelength. The presence of the detection target substance can be confirmed by detecting the fluorescence due to the excitation. In the case that the detection target substance is not a fluorescent substance, a substance labeled by a fluorescent substance that specifically binds with the detection target substance is caused to contact the sample. Thereafter, fluorescence is detected in the same manner as described above, thereby confirming the presence of the specific binding between the fluorescent labels and the detection target substances, that is, the detection target substance.

With recent advances in the performance of photodetectors, such as cooled CCD's, fluorometry has become indispensable in biological research. In addition, fluorescent pigments having fluorescence quantum yields that exceed 0.2, which is the standard for practical use, such as FITC (fluorescence: 525nm, fluorescence quantum yield: 0.6) and Cy5 (fluorescence: 680nm, fluorescence quantum yield: 0.3) have been developed as fluorescent labeling materials and are being widely used.

The absorption cross sectional area of fluorometry is 10⁻¹⁶cm²/molec, which is much greater than the scattering cross sectional area of 10⁻³⁰cm²/molec in Raman scattering. Therefore, fluorometry is widely used as an easily executable method for biological measurements having high quantitative properties. Further, fluorometry is known to be an analysis method which is less influenced by the environment, conditions in which detection target substances are placed, and foreign substances than Raman spectroscopy. Recently, a technique that utilizes the electric field enhancing effect of surface plasmon generated on substrates to amplify the intensity of fluorescence is being used, as disclosed in M. Vareiro et al., "Surface Plasmon Fluorescence Measurements of Human Chorionic Gonadotrophin: Role of Antibody Orientation in Obtaining Enhanced Sensitivity and Limit of Detection", Analytical Chemistry, Vol. 77, No. 8, pp. 2426-2431, 2005.

However, metallic light loss caused by metal probes is a problem. Metallic light loss is a non-radiant form of energy deactivation that occurs in the case that metal is present in the vicinity of fluorescent substances which have absorbed energy and have become excited. The excitation energy is transferred from the fluorescent substances to the metal, and the energy is lost within the metal. Thereby, the energy which is to be utilized to emit fluorescence is reduced, the fluorescence quantum yield of the fluorescent substances decreases, and quantitative properties of fluorescent signals cannot be secured.

### SUMMARY OF THE INVENTION

The present invention has been developed in view of the foregoing circumstances. It is an object of the present invention to provide a cantilever for near field optical microscopes which is capable of effectively utilizing the electric field enhancing effect of plasmon and securing the quantitative properties of fluorescent signals by suppressing metallic light loss. It is another object of the present invention to provide a plasmon enhanced fluorescence microscope and a plasmon enhanced fluorescence detecting method that employ the cantilever.

The cantilever for near field optical microscopes of the present invention is equipped with a probe in the vicinity of a free end thereof. The probe comprises: a thin film portion that constitutes a surface of the probe and which includes at least one layer of thin film; and an inner bulk portion which is covered by the thin film portion. A thin dielectric film is provided as the outermost layer of the thin film portion; and a metal portion is provided toward the interior of the probe from the thin dielectric film.

In the present specification, the term "near field optical microscope" refers to optical microscopes that observe, analyze, and process samples with probes in which photons are sealed within regions less than or equal to diffraction limits. Near field optical microscopes may be positioned as evaluating apparatuses which are scanning probe microscopes, such as scanning tunnel microscopes and atomic force microscopes, having the functions of two dimensional analysis and spectroscopic analysis of measurement regions.

The term "thin film portion" collectively refers to each thin film layer, which is defined as separate layers from the viewpoints of manufacturing steps and constituent materials. The thin film portion constitutes the surface of the conically shaped probe.

The term "bulk portion" refers to a portion of the conically shaped probe other than the thin film portion.

Note that the portion of the conically shaped probe that corresponds to the bottom surface of a cone is where the probe is linked to the main body of the cantilever. Therefore, it is considered that this portion does not have a surface.

In the cantilever for near field optical microscopes of the present invention, it is desirable for the metal portion to be a thin metal film that constitutes a portion of the thin film portion.

In this case, it is desirable for the bulk portion to be of a non metallic bulk material and the metal portion to be the thin metal film which is adjacent to the thin dielectric film of the thin film portion.

Alternatively, the metal portion may be a metallic bulk material that constitutes the bulk portion.

In this case, it is desirable for the bulk portion to be constituted by the metallic bulk material and the thin film portion to be constituted solely by the thin dielectric film.

It is desirable for the material of the thin dielectric film to be selected from a group consisting of: silicon oxide; polystyrene; PMMA (polymethyl methacrylate); polycarbonate; and cycloolefin.

The plasmon enhanced fluorescence microscope of the present invention comprises:
a cantilever for near field optical microscopes of the present invention as described above;
a substrate having a detection section, to which samples containing detection target substances and fluorescent labels that specifically bind to the detection target substances are supplied;
a light source that emits an excitation light beam of a wavelength that excites and causes the fluorescent labels to emit light;
a near field light generating means that utilizes the excitation light beam to cause near field light to be generated at the leading end of the probe, and to generate local plasmon at the metal portion of the probe; and
a photodetector provided to detect fluorescence emitted by the fluorescent labels which are excited by the near field light;
a specific binding substance that specifically binds with the detection target substance being provided on the surface of the detection section; and
the near field light being enhanced by the electric field enhancing effect of the local plasmon.

In the present specification, the term "detection section" refers to a location to which samples and fluorescent labels are supplied. Surface modifications are employed to immobilize the fluorescent labels to the detection section, and the immobilized fluorescent labels are excited by the near field light to emit fluorescence.

The term "specific binding substance" refers to substances that bind to specific substances, such as chelators with respect to proteins, and antigens with respect to antibodies.

The specific binding substance is provided to enable a type of fluorometry known as the "sandwich method". In the sandwich method, the detection target substance is an antigen, for example. In this case, the specific binding substance is a primary antibody to the antigen. The antigens are caused to bind with the primary antibodies, which are immobilized on the substrate. Thereafter, the antigens are labeled with fluorescent labels via secondary antibodies (linkers which are labeled with fluorescent labels). The fluorescence from the fluorescent labels, that is, from locations at which the antigens are present, is detected. The sandwich method of fluorometry is not limited to employing antigen/antibody reactions. Appropriate linkers to be labeled with fluorescent labels and specific binding substances can be selected according to detection conditions.

In the plasmon enhanced fluorescence microscope of the present invention, it is desirable for the near field light generating means to employ a first optical system to irradiate the excitation light beam onto the probe of the cantilever to cause the near field light and the local plasmon to be generated. Here, the "first optical system" is an optical system that cooperates with a vertical moving means that adjusts the distance between the cantilever and the sample and a scanning means that scans the cantilever two dimensionally over the sample, to guide the excitation light beam such that it is irradiated onto the probe.

Alternatively, the substrate may be a dielectric prism substrate. In this case, it is desirable for the near field light generating means to employ a second optical system to irradiate the excitation light beam through the substrate onto the detection section of the substrate such that conditions for total reflection are satisfied at a surface thereof to generate evanescent light; and for the resonance of the evanescent light to cause the near field light and the local plasmon to be generated. Here, the "second optical system" is an optical system that guides the excitation light beam such that it is irradiated through the dielectric prism substrate onto a surface of the detection section thereon, such that conditions for total reflection are satisfied. In this case, it is desirable for the detection section to comprise a second thin metal film provided on the dielectric prism substrate.

The plasmon enhanced fluorescence detecting method comprises the steps of:
(A) supplying a sample containing detection target substances and fluorescent labels that specifically bind to the detection target substances to a detection section, and immobilizing the fluorescent labels to the detection section employing a specific binding substance that specifically binds to the detection target substances;
(B) causing the leading end of the probe of the cantilever for near field optical microscopes defined in Claim 1 to approach the detection section, and causing enhanced near field light to be generated at the leading end of the probe;
(C) scanning the probe two dimensionally over the detection section, while maintaining the state in which the leading end of the probe is in the vicinity of the detection section, and while the enhanced near field light is being generated;
(D) exciting the fluorescent labels which are immobilized on the detection section with the enhanced near field light, and detecting the fluorescence emitted by the fluorescent labels; and
(E) continuously executing steps (C) and (D) either alternately or simultaneously, and analyzing the optical properties of the fluorescence emitted by the fluorescent labels.

In the plasmon enhanced fluorescence detecting method of the present invention, it is desirable for the fluorescent labels to be multiphoton fluorescent materials. In this case, it is particularly desirable for the multiphoton fluorescent materials to be selected from among a group consisting of: rhodamine B; benzothiadiazole fluorescent pigment; coumalin pigment; stilbene compounds; dihydrophenanthrene compounds; and fluorene compounds.

Alternatively, the fluorescent labels may be nonlinear fluorescent materials. In this case, the nonlinear fluorescent materials may be selected from among a group consisting of:
nitrobenzene compounds including PNA (p-nitroaniline); heterocyclic compounds including heteroaromatic aldehide; styryl compounds; and dithiole compounds.

Here, the term "multiphoton fluorescent materials" refers to materials that emit fluorescence when excited by excitation light beams having wavelengths which are integer multiples of the wavelengths of excitation light beams used to excite standard fluorescent materials (the integer is greater than or equal to 2). For example, a two photon fluorescent material refers to a fluorescent material which is excited by an excitation light beam having a wavelength twice that of an excitation light beam used to excite standard fluorescent materials.

The term "nonlinear fluorescent materials" refers to materials that exhibit nonlinear optical effects such as optical harmonic generation, optical mixing, and optical parametric effects when irradiated with intense incident light beams.

In the cantilever for near field optical microscopes, the plasmon enhanced fluorescence microscope, and the plasmon enhanced fluorescence detecting method of the present invention, the metal portion of the probe is coated by the thin dielectric film. Thereby, the distance between the metal portion and the fluorescent labels (fluorescent materials) can be controlled, and metallic light loss of the fluorescence emitted by the fluorescent labels can be suppressed. Accordingly, the electric field enhancing effect of plasmon can be effectively utilized and the quantitative properties of fluorescent signals can be secured.

In addition, the high spatial resolution of the probe, in which photons are sealed within a region less than or equal to the diffraction limit, of several tens of nanometers, can be utilized. Thereby, fluorescent signals can be obtained from intentionally selected local regions and, configuration into arrays and detection of multiple items are enabled. Accordingly, simplification and miniaturization, such as configuration into chips, becomes possible during detection of DNA's and antibodies.

Further, measurement can be performed with extremely small amounts of biological samples, which are generally known to be expensive. Therefore, large cost reductions are possible.

### BRIEF DESCRIPTION OF THE DRAWINGS

Figure 1A is a schematic sectional view of a cantilever for near field optical microscopes according to a first embodiment of the present invention.
Figure 1B is a schematic sectional view of a cantilever for near field optical microscopes according to a second embodiment of the present invention.
Figure 2A is a schematic diagram that illustrates the construction of a plasmon enhanced fluorescence microscope according to a third embodiment of the present invention.
Figure 2B is a magnified sectional view that schematically illustrates a detection section of the plasmon enhanced fluorescence microscope of Figure 2A.
Figure 3 is a sectional view that schematically illustrates a detection section of a plasmon enhanced fluorescence microscope according to a fourth embodiment of the present invention.

### BEST MODE FOR CARRYING OUT THE INVENTION

Hereinafter, embodiments of the present invention will be described with reference to the attached drawings. However, the present invention is not limited to the embodiments which are described below.

### Cantilever for Near Field Optical Microscopes

### <First Embodiment>

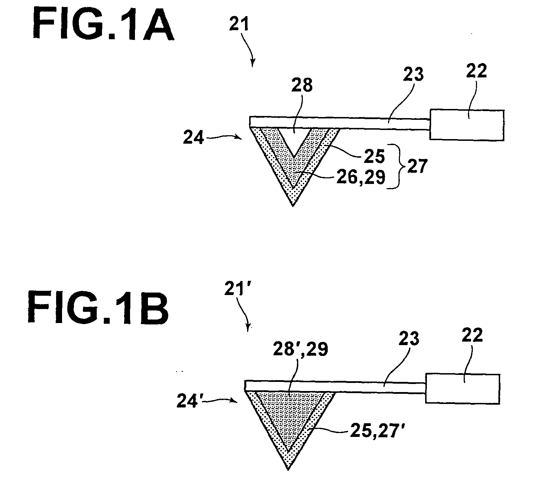

Figure 1A is a schematic sectional view of a cantilever 21 for near field optical microscopes according to a first embodiment of the present invention, taken along the longitudinal axis of a lever portion 23 of the cantilever. As illustrated in Figure 1A, the cantilever 21 is equipped with a support portion 22, the lever portion 23, and a conically shaped probe 24, which is formed in the vicinity of the free end of the lever portion 23. A bulk portion 28 of the probe 24 is formed by a non metallic material, and a thin film portion 27 of the probe 24 is constituted by a thin dielectric film 25 as its outermost layer, and a thin metal film 26.

Inorganic oxides or polymer films may be employed as the thin dielectric film 25. It is desirable for the material of the thin dielectric film 25 to be selected from a group consisting of: silicon oxide film; polystyrene; PMMA (polymethyl methacrylate); polycarbonate; and cycloolefin. Silicon oxide film (SiO₂) is particularly preferred from the viewpoint of conditions for suppressing metallic light loss. It is desirable for the film thickness of the thin dielectric film 25 to be within a range from 10nm to 100nm for the same reason. The thin film forming method employed to form the thin dielectric film 25 is not particularly limited, and may be appropriately selected according to the material of the thin dielectric film 25. Examples of such thin film forming methods include the sputtering method and the vapor deposition method.

The material of the thin metal film 26 is not particularly limited, and may be appropriately selected according to measurement conditions. It is desirable for Au, Ag, Pt, or the like to be employed, from the viewpoint of conditions for generating local plasmon. It is desirable for the film thickness of the thin metal film 26 to be within a range from 20nm to 60nm for the same reason. The thin film forming method employed to form the thin metal film 26 is not particularly limited, and may be appropriately selected according to the material of the thin metal film 26. Examples of such thin film forming methods include the sputtering method and the vapor deposition method.

In the cantilever 21 constructed as described above, a metal portion 29 (the thin metal film 26 in the first embodiment) is coated by the thin dielectric film 25. Therefore, when fluorescence detection is performed using the cantilever 21, the distance between the metal portion 29 and fluorescent labels 5 is controlled, and metallic light loss of fluorescence emitted by the fluorescent labels 5 can be suppressed. Accordingly, the electric field enhancing effect of plasmon can be effectively utilized and the quantitative properties of fluorescent signals can be secured.

### <Second Embodiment>

Figure 1B is a schematic sectional view of a cantilever 21' for near field optical microscopes according to a second embodiment of the present invention. As illustrated in Figure 1B, the cantilever 21' is equipped with a support portion 22, a lever portion 23, and a conically shaped probe 24', which is formed in the vicinity of the free end of the lever portion 23. A bulk portion 28' of the probe 24' is formed by a metallic material, and a thin film portion 27' of the probe 24' is constituted by a thin dielectric film 25.

In the second embodiment, the probe 24' functions as the metal portion 29 at which local plasmon is generated. For this reason, it is desirable for the bulk portion 28' to be formed by Au, Ag, Pt, or the like, from the viewpoint of conditions for generating local plasmon.

The thin dielectric film 25 is the same as that of the first embodiment.

The cantilever 21' of the second embodiment can obtain the same advantageous effects as those obtained by the cantilever 21 of the first embodiment.

### Plasmon Enhanced Fluorescence Microscope and Fluorescence Detecting Method

### <Third Embodiment>

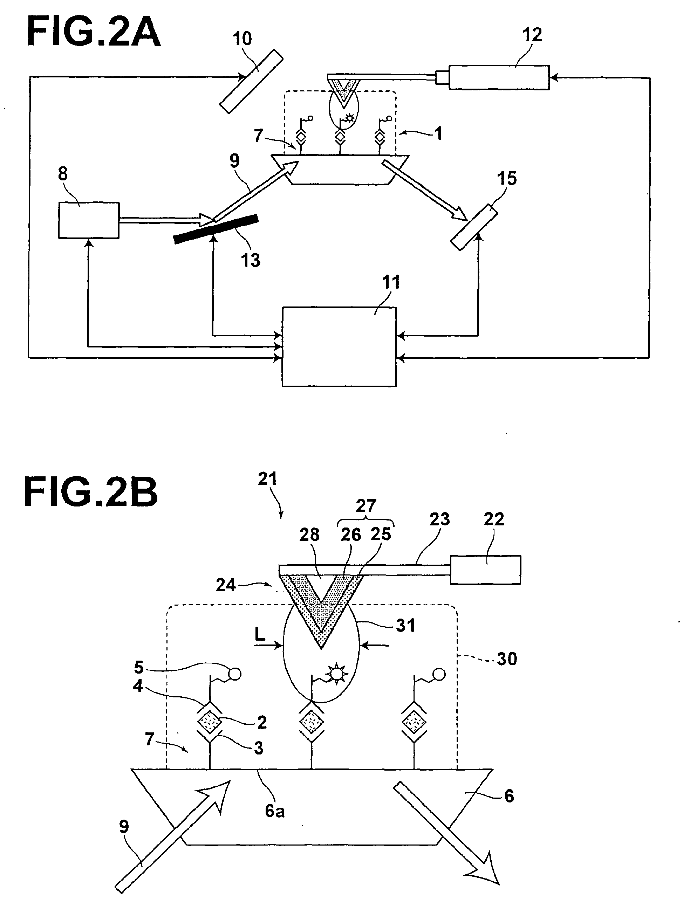

A plasmon enhanced fluorescence microscope according to a third embodiment of the present invention will be described with reference to Figure 2A and Figure 2B.

Figure 2A is a schematic diagram that illustrates the construction of the plasmon enhanced fluorescence microscope of the third embodiment. Figure 2B is a magnified sectional view that schematically illustrates a detection section 7 of the plasmon enhanced fluorescence microscope of Figure 2A.

A case is considered in which this plasmon enhanced fluorescence microscope is employed to detect avidin 2 as a detection target substance included in a sample 1. The plasmon enhanced fluorescence microscope is equipped with: a dielectric prism substrate 6 which has the detection section 7; surface modifications (not shown) which are provided on the detection section 7; primary antibodies 3, which are immobilized on the surface modifications, that specifically bind with avidin 2; the cantilever 21 for near field optical microscopes of the first embodiment described above; a fine motion scanner 12 for controlling the cantilever 21; a light source 8 that emits an excitation light beam 9 of a wavelength that excites fluorescent labels 5; a second incident optical system 13; a photodetector 10 provided at a position at which fluorescence can be detected; a second photodetector 15 provided at a position at which reflected light can be detected; and a PC 11 (personal computer) that controls the fine motion scanner 12, the light source 8, the photodetector 10, the second incident optical system 13, and the second photodetector 15. Figure 2B illustrates the fluorescent labels 5 and secondary antibodies 4, which are labeled by the fluorescent labels 5, that specifically bind to avidin 2.

The dielectric prism substrate 6 may be formed by transparent materials such as transparent resins and glass. It is desirable for the dielectric prism substrate 6 to be formed by resin. In the case that the dielectric prism substrate 6 is formed by resin, polymethyl methacrylate (PMMA), polycarbonate (PC), and non crystalline polyolefin (APO) that includes cycloolefin may be favorably employed.

The surface modifications and the primary antibodies 3 are not particularly limited, and may be appropriately selected according to detection conditions (particularly the detection target substance), as long as they are capable of immobilizing the fluorescent labels 5 to the detection section 7 via the detection target substance 2 and the secondary antibodies 4. In the plasmon enhanced fluorescence microscope of the third embodiment, a method comprising the following steps may be executed to administer a silane coupling process on the dielectric prism substrate 6 and to immobilize avidin 2 labeled with the fluorescent labels 5 (Cy5 pigment) onto the detection section 7.

### (1) Introduction of Amino Groups with Silane Coupling Agent (APS)

18ml of EtOH, 1.98ml of Milli-Q™ water, 20µl of 1N HCl are mixed within a sealable test tube, then heated in an incubator at 60°C. Thereafter, 24.3mg of APS (3-aminopropyl trimethoxy silane) is added to the test tube and the mixture is agitated. A cuvette for holding liquids on the dielectric prism substrate 6 is provided, and 10ml of the APS mixed solution is dispensed into the cuvette. The dielectric prism substrate 6 is placed in the incubator at 60°C with the solution in the cuvette, and left to react for 12 minutes. Thereafter, the interior of the cuvette is cleansed five times with an EtOH/Milli-Q™ water (9:1 volume ratio) solution by agitating the EtOH/Milli-Q™ water solution within the cuvette. Then, all of the liquid within the cuvette is removed, and the dielectric prism substrate 6 is placed in the incubator at 90°C and heated for 180 minutes.

### (2) Modification with Divinyl Sulfone

10ml of a 4 weight % divinyl sulfone solution and 30ml of Milli-Q™ water are mixed in a sealable test tube, to create a 1% divinyl sulfone solution. The solution is dispensed into the cuvette on the dielectric prism substrate 6, and left to react for 60 minutes. Thereafter, the interior of the cuvette is cleansed five times with Milli-Q™ water by agitating the Milli-Q™ water within the cuvette.

### (3) Immobilization of Pigment Labeled Avidin

PBS (phosphate buffered saline) is dispensed into the cuvette, and cleansing is performed five times by agitating the PBS within the cuvette. Then, a labeled avidin solution (1mg/ml, diluted with PBS) is dispensed into the cuvette on the dielectric prism substrate 6, and left to react for 60 minutes at room temperature. Thereafter, PBS is dispensed into the cuvette, and cleansing is performed five times by agitating the PBS within the cuvette.

The cantilever 21 is the cantilever 21 for near field optical microscopes of the first embodiment. That is, a 40nm thick Au film and a 20nm SiO₂ film are formed on the probe 24 thereof by vacuum vapor deposition. Note that the cantilever is not limited to the cantilever 21 of the first embodiment, as long as it is a cantilever of the present invention.

The fine motion scanner 12 is not particularly limited, and may be appropriately selected according to detection conditions. Note that here, the "fine motion scanner" refers to a device, in which a vertical moving means that causes the leading end of the probe 24 to approach the detection section 7 and a scanning means that scans the probe 24 over the detection section 7 are incorporated.

The excitation light beam 9 is not particularly limited, and may be a single wavelength light beam emitted from a laser light source or the like, or a broad spectrum light beam emitted from a white light source. The type of light beam to be employed as the excitation light beam 9 may be appropriately selected according to detection conditions.

The light source 8 is not particularly limited, and may be a laser light source. The type of light source to be employed as the light source 8 may be appropriately selected according to detection conditions.

LAS-1000 plus by FUJIFILM Corp. may be employed as the photodetector 10. However, the photodetector 10 is not limited to the above, and may be selected appropriately according to detection conditions. Examples of alternative photodetectors include: CCD's; PD's (photodiodes); photoelectron multipliers; and c-MOS's. In addition, a moving mechanism, that moves the photodetector 10 to positions at which fluorescence emitted from the fluorescent labels 5 that are immobilized on the detection section 7 can be efficiently detected, may be provided as necessary.

The second optical system 13 is an optical system that guides the excitation light beam 9 such that it is irradiated through the dielectric prism substrate 6 onto a surface of the detection section 7 thereon, such that conditions for total reflection are satisfied.

Similarly to the photodetector 10, LAS-1000 plus by FUJIFILM Corp. may be employed as the second photodetector 15. However, the second photodetector 15 is not limited to the above, and may be selected appropriately according to detection conditions. Examples of alternative photodetectors include: CCD's; PD's (photodiodes); photoelectron multipliers; and c-MOS's. The second photodetector 15 is utilized to receive reflected light beams, which are totally internally reflected by the dielectric prism substrate 6, as necessary. Detailed data regarding the detection target substance 2 can be obtained by analyzing the spectral distribution of the reflected light beam and the like.

The type of fluorescent label 5 to be employed in the present invention is not limited, and may be appropriately selected according to detection conditions (particularly, the detection target substance). For example, Cy5 pigment may be employed in the case that the wavelength of the excitation light beam 9 is 650nm. In this case, the fluorescent labels 5 and the antigens 2 can be caused to specifically bind with each other using antigen/antibody reactions, by attaching the fluorescent labels 5 to monoclonal antibodies or the like.

Meanwhile, the plasmon enhanced fluorescence detecting method to be executed by the plasmon enhanced fluorescence microscope of the third embodiment comprises the steps of:
(A) supplying a sample containing avidin 2 and the secondary antibodies 4, which are labeled with the fluorescent labels 5 to the detection section 7, and immobilizing the fluoresent labels 5 to the detection section 7 employing the primary antibodies 3 that specifically bind to avidin 2, via the secondary antibodies 4 and avidin 2;
(B) causing the leading end of the probe 24 of the cantilever 21 for near field optical microscopes to approach the detection section, irradiating the excitation light beam 9 through the dielectric prism substrate 6 onto the detection section 7 such that conditions for total reflection are satisfied at a surface 6a thereof to generate evanescent light 30, causing near field light 31 to be generated at the leading end of the probe 24 and local plasmon to be generated within the thin Au film 26 of the probe 24, and enhancing the near field light 31 with the electric field enhancing effect of the local plasmon at the leading end of the probe 24;
(C) scanning the probe 24 two dimensionally over the detection section 7, while maintaining the state in which the leading end of the probe 24 is in the vicinity of the detection section, and while the enhanced near field light 31 is being generated;
(D) exciting the fluorescent labels 5 which are immobilized on the detection section 7 with the enhanced near field light 31, and detecting the fluorescence emitted by the fluorescent labels 5; and
(E) continuously executing steps (C) and (D) either alternately or simultaneously, and analyzing the optical properties of the fluorescence emitted by the fluorescent labels 5.

Here, the supply of the sample 1 is not limited to the step described above. Alternatively, a sample 1 containing avidin 2 may be cause to flow over the detection section 7, and the avidin 2 may be immobilized onto the detection section 7. Thereafter, the secondary antibodies 4 that specifically bind to avidin 2 and which are labeled with the fluorescent labels 5 may be caused to flow over the detection section 7, and the fluorescent labels 5 may be immobilized onto the detection section 7 via the avidin 2 and the secondary antibodies.

In addition, the step of generating near field light is not limited to step (B) above. For example, other techniques for generating the evanescent light 30 maybe employed, or the excitation light beam 9 may be directly irradiated onto the probe 24.

Hereinafter, the operation of the plasmon enhanced fluorescence microscope of the third embodiment will be described.

As illustrated in Figure 2B, the illumination of the evanescent light 30 causes the near field light 31 to be generated at the leading end of the probe 24. At the same time, local plasmon is generated within the thin Au film 26 inside the probe 24. The near field light 31 is enhanced by the electric field enhancing effect of the local plasmon. The width L of the enhanced near field light 31 is several tens of nanometers. Although the cantilever 21 is used, the enhanced near field light 31 actually functions as the probe. For this reason, the interval between the cantilever 21 and the sample 1 and the like is greater than that of standard scanning probe microscopes, within a range directly under the probe 24 where the fluorescent labels 5 are irradiated by the near field light 31.

The probe 24 is scanned while maintaining the state described above. Thereby, the fluorescent labels 5 which are immobilized on the detection portion 7 at positions directly under the probe 24 are excited by the near field light 31. At this time, fluorescence is emitted from these fluorescent labels 5. In the plasmon enhanced fluorescence microscope of the third embodiment, the surface of the probe 24 is coated with the SiO₂ film. Therefore, the distance between the thinAu film26 and the fluorescent labels 5 is controlled, and the fluorescence can be efficiently and quantitatively detected, without metallic light loss of the fluorescence occurring. That is, the presence of avidin 2 can be quantitatively confirmed. Note that the evanescent light 30, which is generated over a wider range than the near field light 31, also excites the fluorescent labels 5 and causes them to emit fluorescence. However, the intensity of evanescent light 30 decreases exponentially corresponding to the distance from the detection section 7. Therefore, there is a difference by an order of 100 between the electric field intensities of the evanescent light 30 and the enhanced near field light 31. Accordingly, the influence of the fluorescence emitted by the fluorescent labels 5 due to excitation by the evanescent light 30 can be ignored.

The fluorescent signals which are obtained in this manner are detected by the photodetector 10, and the results of the detection are transmitted to the PC 11 for storage and analysis. The PC 11 is connected to the fine motion scanner 12 via a fine scanner controller, in order to receive data regarding the positions of the probe 24. As a result, data regarding the wavelengths, intensities, and the positions of the detected fluorescence can be analyzed by the PC 11. Thereby, the distribution of fluorescence intensity within the scanning range can be obtained, and the positions where avidin 2 is present can be visually confirmed. The sizes of detection target substances 2 including avidin 2 are approximately 10nm. Therefore, when the density at which the detection target substances 2 are immobilized on the detection section 7 is considered, it is possible to detect the detection target substances 2 at the molecular level, by employing the plasmon enhanced fluorescence microscope of the third embodiment.

As described above, the metal portion 29 of the probe 24 is coated by the thin dielectric film 25 in the plasmon enhanced fluorescence microscope of the third embodiment. Therefore, the distance between the metal portion 29 and the fluorescent labels 5 can be controlled, and metallic light loss of the fluorescence emitted from the fluorescent labels 5 can be suppressed. Accordingly, the electric field enhancing effect of plasmon can be effectively utilized and the quantitative properties of fluorescent signals can be secured.

In addition, a high spatial resolution of several tens of nanometers can be utilized. Thereby, fluorescent signals can be obtained from intentionally selected local regions and, configuration into arrays and detection of multiple items are enabled. Accordingly, simplification and miniaturization, such as configuration into chips, becomes possible.

Further, measurement can be performed with extremely small amounts of biological samples, which are generally known to be expensive. Therefore, large cost reductions are possible.

Further, the surface modifications are administered on the dielectric prism substrate 6 in the present invention. Therefore, non specific adsorption of avidin 2 and the fluorescent labels 5 onto the surface of the dielectric prism substrate 6 can be prevented. Accordingly, the influence of noise due to non specific adsorption can be reduced, the S/N ratio can be improved, and detection of fluorescence having high quantitative properties becomes possible.

### <Fourth Embodiment>

Next, a plasmon enhanced fluorescence microscope according to a fourth embodiment of the present invention will be described.

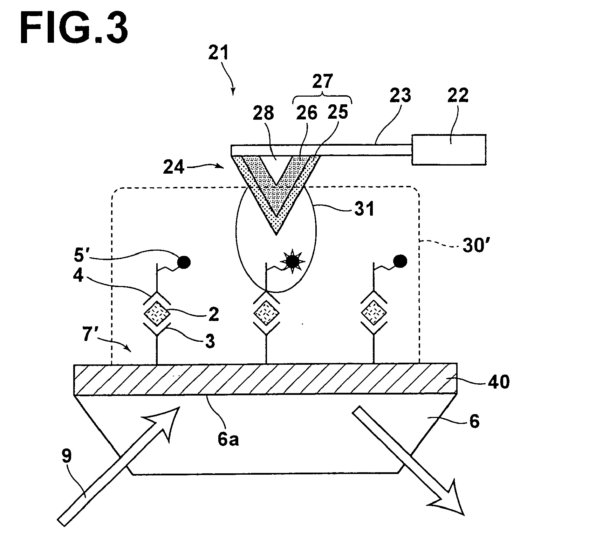

Figure 3 is a sectional view that schematically illustrates a detection section 7' of the plasmon enhanced fluorescence microscope of the fourth embodiment, and corresponds to Figure 2B in the description regarding the plasmon enhanced fluorescence microscope of the first embodiment. In the plasmon enhanced fluorescence microscope of the fourth embodiment, a second thin metal film 40 is added to the detection section 7 on the dielectric prism substrate of the plasmon enhanced fluorescence microscope of the first embodiment. In addition, multiphoton fluorescent materials 5' are employed as fluorescent labels for labeling avidin 2. The other components of the plasmon enhanced fluorescence microscope of the fourth embodiment which are the same as those of the first embodiment will be denoted by the same reference numerals, and detailed descriptions thereof will be omitted insofar as they are not particularly necessary. However, the wavelength of the excitation light beam 9 is selected appropriately according to the multiphoton fluorescent materials 5'.

Accompanying the addition of the fourth thin metal film 40, the step of generating near field light differs from step (B) executed by the plasmon enhanced fluorescence microscope of the first embodiment. In the plasmon enhanced fluorescence microscope of the fourth embodiment, the second incident optical system 13 is used to irradiate the excitation light beam 9 through the dielectric prism substrate 6 onto the detection section 7 such that conditions for total reflection are satisfied at a surface 6a thereof to generate evanescent light 30'. At the same time, surface plasmon is generated within the second thin metal film 40, and the evanescent light 30' is enhanced by the electric field enhancing effect of the plasmon. The near field light 31 is generated at the leading end of the probe 24 by resonating with the enhanced evanescent light 30'. At the same time, local plasmon is generated within the thin Au film 26 of the probe 24, the near field light 31 is enhanced by the electric field enhancing effect of the local plasmon.

The material of the second thin metal film 40 is not particularly limited, and may be appropriately selected according to measurement conditions. It is desirable for Au, Ag, Pt, or the like to be employed, from the viewpoint of conditions for generating local plasmon. It is desirable for the film thickness of the second thin metal film 40 to be within a range from 20nm to 60nm for the same reason. The thin film forming method employed to form the second thin metal film 40 is not particularly limited, and may be appropriately selected according to the material of the second thin metal film 40. Examples of such thin film forming methods include the sputtering method and the vapor deposition method.

The multiphoton fluorescent materials 5' are not particularly limited, and may be selected appropriately according to detection conditions. It is desirable for the multiphoton fluorescent materials 5' to be selected the from among a group consisting of: rhodamine B; benzothiadiazole fluorescent pigment; coumalin pigment; stilbene compounds; dihydrophenanthrene compounds; and fluorene compounds, from the viewpoint of fluorescent quantum yield and wavelengths for generating plasmon.

In the plasmon enhanced fluorescence microscope of the fourth embodiment, the second incident optical system 13 causes surface plasmon to be generated at the second thin metal film 40. The evanescent light 30', which is enhanced by the electric field enhancing effect of surface plasmon, is generated at the surface of the detection section 7. The enhanced evanescent light 30' generates the near field light 31 at the leading end of the probe 24 and also generates local plasmon within the thin Au film 26 of the probe 24. Accordingly, the near field light, which is enhanced by the electric field enhancing effect of local plasmon, excites the multiphoton fluorescent materials 5' and causes them to emit fluorescence.

In the plasmon enhanced fluorescence microscope of the second embodiment, the second thin metal film 40 is additionally provided, and the electric field enhancing effect of surface plasmon is also utilized. As a result, the near field light 31 generated at the leading end of the probe 24 is enhanced to a greater degree than in the plasmon enhanced fluorescence microscope of the first embodiment. Accordingly, fluorescence detection at even higher sensitivity becomes possible.

As described above, the plasmon enhanced fluorescence microscope of the second embodiment exhibits advantageous effects similar to those of the plasmon enhanced fluorescence microscope of the first embodiment.

In addition, the following advantageous effects, which are unique to the plasmon enhanced fluorescence microscope of the second embodiment, are also exhibited.

Two photon excitation fluorometry is known as a representative fluorometry method that employs multiphoton fluorescent materials. Two photon excitation fluorometry employs excitation light beams having a wavelength twice that of excitation light beams for standard fluorescent materials. Therefore, the wavelength of excitation light beams can be shifted from wavelengths which are absorbed by coexisting substances (water, serum proteins, and enzymes, for example). Accordingly, fluorescence measurements can be performed with little noise. In addition, because the wavelength of the excitation beams is within the near infrared range, there is no possibility that detection target substances will be destroyed during measurement, even if they are living tissue or the like.

In cases that multiphoton fluorescent materials are employed as fluorescent labels, extremely expensive pulse lasers having high peak values are used, in order to obtain sufficient fluorescence. This is because the absorption cross section of multiphoton fluorescent materials is smaller than those of single photon excitable materials by several orders of ten.

However, in the present invention, the near field light 31, which is enhanced by the electric field enhancing effect of local plasmon, is utilized. Therefore, the enhanced near field light 31 has an intensity from ten times to 10⁶ times the intensities of standard excitation light beams. For this reason, the enhanced near field light 31 is of a sufficient intensity to excite the multiphoton fluorescent materials. That is, the absorption cross section can be practically increased, and therefore sufficient intensities of fluorescence can be obtained. Accordingly, low cost and low noise multiphoton excited fluorometry is enabled without employing expensive apparatuses.

Similar advantageous effects can be obtained in cases that nonlinear fluorescent materials are employed instead of the multiphoton fluorescent materials. From the viewpoints of fluorescent quantum yield and wavelengths for generating plasmon, it is desirable for the nonlinear fluorescent materials to be selected from among a group consisting of: nitrobenzene compounds including PNA (p-nitroaniline); heterocyclic compounds including heteroaromatic aldehide; styryl compounds; and dithiole compounds.

Note that descriptions were given regarding antigen/antibody reactions in the above embodiments. However, the present invention is not limited to utilizing antigen/antibody reactions, and other reactions that have specific binding properties may be utilized to obtain the same advantageous results.

As described above, in the cantilever for near field optical microscopes, the plasmon enhanced fluorescence microscope, and the plasmon enhanced fluorescence detecting method of the present invention, the metal portion of the probe is coated by the thin dielectric film. Thereby, the distance between the metal portion and the fluorescent labels can be controlled, and metallic light loss of the fluorescence emitted by the fluorescent labels can be suppressed. Accordingly, the electric field enhancing effect of plasmon can be effectively utilized and the quantitative properties of fluorescent signals can be secured.

## Claims

1. A cantilever for near field optical microscopes equipped with a probe (24) in the vicinity of a free end thereof, the probe (24) comprising:
a thin film portion (27) that constitutes a surface of the probe (24) and which includes at least one layer of thin film; and
an inner bulk portion (28) which is covered by the thin film portion (27);
a thin dielectric film (25) being provided as the outermost layer of the thin film portion (27); and
a metal portion (29) being provided toward the interior of the probe (24) from the thin dielectric film (25).

2. A cantilever for near field optical microscopes as defined in Claim 1, wherein:
the metal portion (29) is a thin metal film (26) that constitutes a portion of the thin film portion (27).

3. A cantilever for near field optical microscopes as defined in Claim 2, wherein:
the bulk portion (28) is of a non metallic bulk material; and
the metal portion (29) is the thin metal film (26) which is adjacent to the thin dielectric film (25) of the thin film portion (27).

4. A cantilever for near field optical microscopes as defined in Claim 1, wherein:
the metal portion (29) is a metallic bulk material (28') that constitutes the bulk portion (28).

5. A cantilever for near field optical microscopes as defined in Claim 4, wherein:
the bulk portion (28) is constituted by the metallic bulk material (28'); and
the thin film portion (27) is constituted solely by the thin dielectric film (25).

6. A plasmon enhanced fluorescence microscope, comprising:
a cantilever for near field optical microscopes as defined in any one of Claims 1 through 5;
a substrate (6) having a detection section, to which samples containing detection target substances (2) and fluorescent labels (5) that specifically bind to the detection target substances (2) are supplied;
a light source (8) that emits an excitation light beam (9) of a wavelength that excites and causes the fluorescent labels (5) to emit light;
a near field light generating means that utilizes the excitation light beam (9) to cause near field light (31) to be generated at the leading end of the probe (24), and to generate local plasmon at the metal portion (26, 29) of the probe (24); and
a photodetector (10) provided to detect fluorescence emitted by the fluorescent labels (5) which are excited by the near field light (31);
a specific binding substance (3) that specifically binds with the detection target substance (2) being provided on the surface of the detection section; and
the near field light (31) being enhanced by the electric field enhancing effect of the local plasmon.

7. A plasmon enhanced fluorescence microscope as defined in Claim 6, wherein:
the near field light generating means employs a first optical system to irradiate the excitation light beam (9) onto the probe (24) of the cantilever to cause the near field light (31) and the local plasmon to be generated.

8. A plasmon enhanced fluorescence microscope as defined in Claim 6, wherein:
the substrate (6) is a dielectric prism substrate;
the near field light generating means employs a second optical system (8, 13) to irradiate the excitation light beam (9) through the substrate (6) onto the detection section of the substrate (6) such that conditions for total reflection are satisfied at a surface thereof to generate evanescent light (30); and
the resonance of the evanescent light (30) causes the near field light (31) and the local plasmon to be generated.

9. A plasmon enhanced fluorescence microscope as defined in Claim 8, wherein:
the detection section comprises a second thin metal film (40) provided on the dielectric prism substrate (6).

10. A plasmon enhanced fluorescence detecting method, comprising the steps of:
(A) supplying a sample containing detection target substances (2) and fluorescent labels (5) that specifically bind to the detection target substances (2) to a detection section, and immobilizing the fluoresent labels (5) to the detection section employing a specific binding substance (3) that specifically binds to the detection target substances (2);
(B) causing the leading end of the probe (24) of the cantilever (21) for near field optical microscopes defined in any one of Claims 1 through 5 to approach the detection section, and causing enhanced near field light (31) to be generated at the leading end of the probe (24) ;
(C) scanning the probe (24) two dimensionally over the detection section, while maintaining the state in which the leading end of the probe (24) is in the vicinity of the detection section, and while the enhanced near field light (31) is being generated;
(D) exciting the fluorescent labels (5) which are immobilized on the detection section with the enhanced near field light (31), and detecting the fluorescence emitted by the fluorescent labels (5); and
(E) continuously executing steps (C) and (D) either alternately or simultaneously, and analyzing the optical properties of the fluorescence emitted by the fluorescent labels (5).

11. A plasmon enhanced fluorescence detecting method as defined in Claim 10, wherein:
the fluorescent labels (5) are multiphoton fluorescent materials or nonlinear fluorescent materials.
